# EUROPEAN PATENT SPECIFICATION

(11) **EP 2 922 611 B1**
(45) Date of publication and mention of the grant of the patent: **02.10.2019**
(21) Application number: 13812151.2
(22) Date of filing: 19.11.2013
(51) Int. Cl.: B01D 53/04, F02M 61/16, B01D 46/00, B01D 46/24

(54) **SELF-PROPULSION GAS SYSTEM**
EIGENANTRIEBSGASSYSTEME
SYSTÈME À GAZ À AUTOPROPULSION

(30) Priority: 21.11.2012 IT BS20120163
(43) Date of publication of application: 30.09.2015
(73) Proprietor: Emer S.p.a., 25135 Brescia (IT)
(72) Inventor: DEFILIPPI, Roberto, 10155 Torino (IT); OMESTI, Giulia, 25135 Brescia (IT)
(74) Representative: Chimini, Francesco
(86) International application number: PCT/IB2013/060240
(87) International publication number: WO 2014/080336

(56) References cited:
- EP-A1- 0 555 761
- EP-A1- 2 024 629
- WO-A1-99/62618
- FR-A1- 2 398 254
- US-A- 3 890 123
- US-A1- 2003 096 152
- US-B1- 6 284 705

## Description

### Field of the invention

The present invention relates in general to self-propulsion gas systems using compressed natural gas, liquefied petroleum gas or other gaseous combustible.

A self-propulsion gas system generally comprises a cylinder or tank placed in the trunk of the vehicle, in any case away from the motor, a pipe which connects the cylinder or tank to the motor, valve devices placed along the pipe to control the flow of gas towards the motor, at least one gas pressure regulation device, and possibly a filter applied downstream of the pressure regulation device and upstream of the injectors.

### State of the art

Up to today, the filters used in self-propulsion gas systems downstream of the geared motor have filtering elements in pleated paper or microfibre or other passive technologies which do not fully ensure that unwanted substances do not reach the injectors. Contaminants may obstruct the injector and cause poor functioning and deterioration of the motor.

The presence of contaminants non-filterable by means of the known, passive- technology filters is a known problem above all in LPG fuelled systems, particularly in the case in which the pressure regulator/vaporiser is low performance and the LPG in output is partially liquid. The LPG in this state in fact presents contaminants dissolved in it which are not captured by the passive-technology filter.

Document EP 2 024 629 A1 discloses a a filtering device for systems supplying gas to internal combustion engines.

### Object of the invention

the present invention sets out to resolve such drawback, in other words to ensure that chemical agents dissolved in the fuel, in particular heavy hydrocarbons , are blocked and do not reach the injectors.

Another object of the present invention is to provide a self-propulsion gas system with a filtering device having a particularly compact structure and made with a reduced number of components and connections, with a consequent limitation of the possible points of leakage, simplification of the installation and maintenance and reduction of the space occupied by the filtering elements.

Such objects are achieved by a self-propulsion gas system according to claim 1. The dependent claims describe preferred embodiments of the self-propulsion gas system.

### Brief description of the drawings

Further characteristics and advantages of the self-propulsion gas system according to the invention will be more clearly comprehensible from the following description of a preferred embodiment thereof, made by way of a nonlimiting example, with reference to the appended drawings, wherein:
Fig. 1 shows a diagram of a self-propulsion gas system according to the invention;

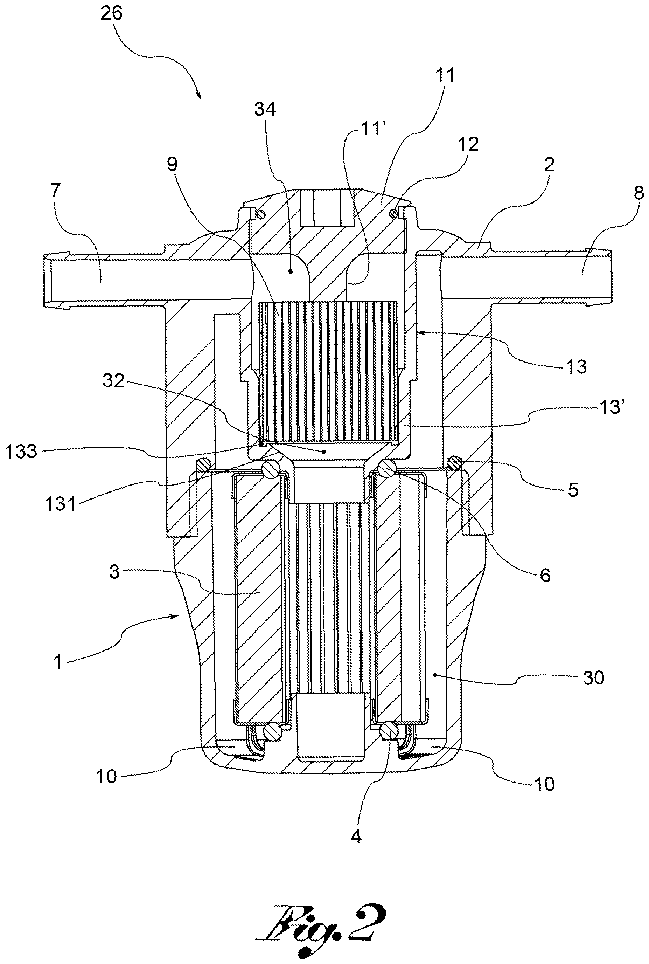

Fig. 2 is an axial cross-section of the filtering device; and

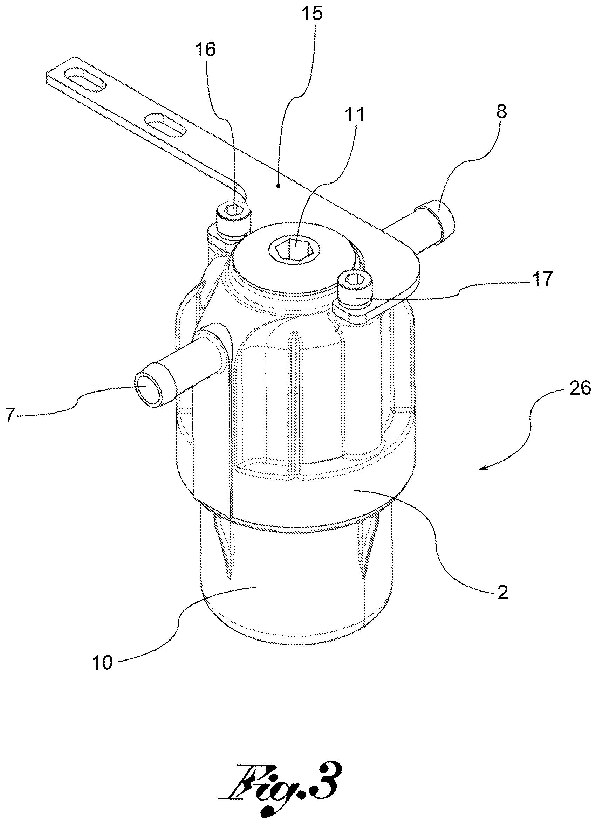

Fig. 3 is a perspective view of the filtering device fitted with a bracket for the attachment thereof to the vehicle.

### Detailed description of the invention

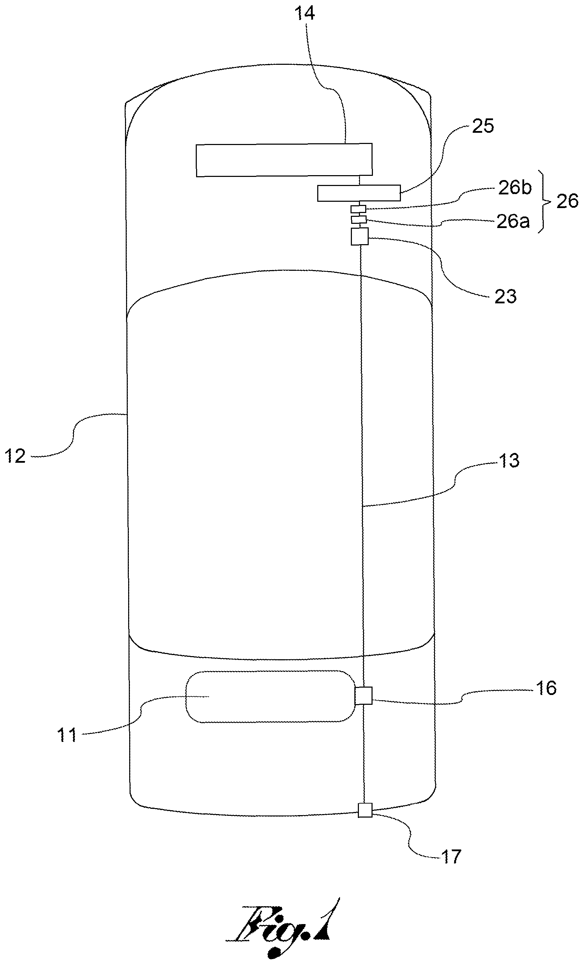

Figure 1 schematically represents a self-propulsion gas system fitted with a filtering device 26 according to the present invention. The system comprises a cylinder or tank 11 containing a high pressure gas, such as methane at approximately 220 bar or LPG in a liquid phase, placed in the rear part of a vehicle 12 and connected, by means of a pipe 13, to the motor 14 of the vehicle. The system further comprises a cylinder valve 16 placed on the output of the tank 11, a pressure regulator 23 to reduce the pressure of the gas contained in the tank to a pressure suitable for powering the motor, and the filtering device 26 placed between said pressure regulator 23 and the injectors of the motor 25.

The filtering device 26 is composed of a passive-technology filtering element 26a (for brevity's sake also referred to as passive filtering element or first filtering element) placed downstream of the pressure regulator, and of an active-technology filtering element 26b (for brevity's sake also referred to as active filtering element or second filtering element) placed downstream of said passive filtering element 26a.

A passive filtering element is taken to mean for example a cartridge in microfibre or paper.

An active filtering element is taken to mean for example an activated carbon filter, also known as ACH (activated carbon honeycomb). In one embodiment, said active filtering element of the type described in the US patent 6,284,705 B1, comprising activated carbons suitable for removing chemical agents and volatile organic compounds from a flow of fluid maintaining the desired flow rate even with low gas pressure in input. In another embodiment, said active filtering element 9 may be of the type described in the documents WO 2008/027938 and WO 2008/027935, with activated carbons to absorb and retain any contaminants and a selective heating system which permits the recovery of the contaminants absorbed by the activated carbons improving the performance of the filter in that by means of said heating, cleaning of the absorbent material is performed and the life of the filter extended.

Consequently, said gas filtering device 26 comprises a first passive-technology filtering element, for example a microfibre cartridge 3, and an active-technology, second filtering element 9, such as activated carbon, fluidically connected in series to said passive-technology filtering element 3 along a gas path between an inlet duct 8 and an outlet duct 7.

More specifically, said first and second filtering elements 3, 9 are housed inside a device body 1 having a gas inlet duct 8 and a filtered gas outlet duct 7. The inlet duct 8 is connected to the pressure regulator 23 and the outlet duct 7 is fluidically connected to the injectors 25.

In a preferred embodiment, in said device body 1 a first chamber 30 in fluidic communication with said inlet duct 8, a second chamber 32 in fluidic communication with said first chamber 30 only through the first filtering element 3, and a third chamber 34 in fluidic communication with said outlet duct 7 and in fluidic communication with said second chamber 32 only through the second filtering element 9, are defined.

Said first and second filtering elements 3, 9 have an axial-symmetric shape, for example substantially cylindrical , and are coaxial with one another. Said first and second filtering elements 3, 9 are positioned in such a manner as to have the respective axes vertically oriented. In other words, considering the vertically oriented filtering device, the two filtering elements 3, 9 are placed one on top of the other. The second filtering element 9 is placed on top of the first filtering element 3.

The gas inlet 8 and outlet 7 ducts extend at right angles with respect to said symmetry axes of the filters. Said inlet and outlet ducts 7, 8 are substantially coplanar to one another, preferably aligned with each other and with the pipe 13 which connects the tank to the motor. In particular, the plane on which the gas inlet 8 and outlet 7 ducts lie extends above the first and the second filtering elements 3, 8.

Such an arrangement of the elements of the filtering device permits easy maintenance and facilitates the dismantling and cleaning of the filters.

According to one embodiment, the first filtering element 3 is positioned on a lower portion 10 of the device body 1. In particular, the first filtering element 3 is positioned with the interposition of a lower sealing element 4, such as an o-ring, so as to snap onto the bottom of said lower portion 10 of the device body 10. The first chamber 30 is an annular shape and extends at least around said first filtering element 3.

The second filtering element 9 is housed in a respective seat 13 made in an upper portion 2 of the device body 1. Preferably, said seat 13 is made in a hollow appendage 13', for example substantially cylindrical, which extends from the top of the device body 1. Said hollow appendage 13' is open at the top and has, in a lower portion thereof, an annular abutment shoulder 133 of the second filtering element 9. In addition, said hollow appendage 13' has a lower connection portion 131 which connects to an outlet end of the first filtering element 3. The second chamber 32 is made in said connection portion 131. More specifically, said lower connection portion 131 of the hollow appendage 13 ends inside the outlet end of the first filtering element 3. In addition, said connection portion 131 is connected to the first filtering element 3 with the interposition of an upper sealing element 6, such as an o-ring. This way, all the gas which has crossed the first filtering element 3 is guided to cross through the second filtering element 9 also.

The third chamber 34 is made in a top portion 132 of the seat 13 of the second filtering element 9. Said top portion 132 is open to permit the insertion/ extraction of the second filtering element 9 from its respective seat 13.

The device body 1 is in addition provided with a closing cap 11 of said top portion 132. Preferably, said closing cap 11 has a lower projection 11' which engages the second filtering element 9 so as to keep it in a respective seat 13, that is to say, inside the hollow appendage 13', against the annular abutment shoulder 133.

In a preferred embodiment, the lower portion 10 and the upper portion 2 of the device body 2 are detachably connected to each other, for example by screwing, with the interposition of a body sealing element 5, for example an o-ring. The lower portion 10 and the upper portion 2 jointly define the first chamber 30. Consequently, said first chamber 30 surrounds not only the first filtering element 3, but also the hollow appendage 13' which the second filtering element 9 is housed in. Such an embodiment makes it possible to exploit the extension in height of the two filtering elements to make the first chamber 30 and thus to limit the total space occupied by the filtering devices.

In a preferred embodiment, the body 1 of the filtering device is made from plastic material. In the preferred embodiment described said body 1 is formed of three pieces only , the lower portion 10, the upper portion 2 and the closing cover 11, the hollow appendage 13' and the inlet and outlet ducts 7, 8, being advantageously made in one piece with the upper portion 2.

The coupling between the two parts of the body 2, 10 and between the cover 11 and the upper portion 2 takes place by interposing sealing elements 5, 12 respectively housed in special seats, which ensure the outer sealing of the device, preventing leakages of gas.

The coupling of the lower part 10 to the upper part 2 generates the seat of the passive-technology filtering cartridge 3, generally a cylindrical shape. The assembly of such passive filtering cartridge 3 takes place by interposing the two sealing gaskets 4, 6 respectively between the cartridge 3 and the lower portion 10 of the body and between the cartridge 3 and the lower connection portion 131 of the hollow appendage 13' so as to ensure the inner seal, that is to say prevent the gas from flowing between the first chamber 30 and the second chamber 32 without passing through the first filtering cartridge 3.

The first filtering cartridge 3, of a cylindrical shape, is placed, in a preferred embodiment, coaxially to the body 1 of the device.

In one embodiment, the inlet and outlet ducts 8, 7 are externally moulded so as to permit the attachment of the rubber tubes normally used where gas is at low pressure.

The fact that the first filtering element 3 is housed mainly inside the lower portion 10 while the second filtering element 9 is housed inside the upper portion 2, simplifies dismantling in the case of maintenance, whether for the replacement of the first filtering cartridge 3 or for regenerating the activated carbon filter which can be easily extracted from above and cleaned with a jet of hot air.

Figure 4 shows the filtering device 26 with a bracket 15 attached thereto, for example specially moulded, destined for attachment of the filtering device 26 to the vehicle. Said bracket 15 may for example be attached to the upper part 2 of the body of the filter by means of screws 16, 17.

The filtering device 26 may be equipped with a temperature sensor and/or a pressure sensor and/or a MAP connection, that is to say an output destined for connection to the suction manifold which permits the pressure sensor to perform reading of the relative gas pressure with reference to the pressure/negative pressure present in said suction manifold.

Consequently, the gas coming from the pressure regulator enters the filtering device, filling the first chamber 30, in which it finds itself still in the initial, unfiltered state, containing for example solid particles, oils, water and heavy hydrocarbons. The first chamber 30 is placed in communication with the second chamber 32 by means of the first, passive-technology filtering element 3; as a result the gas present in the second chamber 32 is filtered of solid particles, oils and water. The second chamber 32 is placed in communication with the third chamber 34 and then with the outlet duct 7 downstream, through the second, active-technology filtering element 9, for example an activated carbon filter. Said outlet duct 7 is in fluidic communication with the injectors. The gas in output from the filtering device is filtered of solid particles, oils, water and heavy hydrocarbons.

A person skilled in the art may make modifications and adaptations to the self-propulsion gas system according to the invention, replacing elements with others functionally equivalent so as to satisfy contingent requirements while remaining within the scope of the following claims. Each of the characteristics described as belonging to a possible embodiment may be realised independently of the other embodiments described.

## Claims

1. Self-propulsion gas system comprising:
- a cylinder containing a high pressure gas and placed in the rear part of a vehicle;
- a cylinder valve placed on the output of the cylinder;
- a pressure regulator;
- a gas fuel filtering device;
- a plurality of fuel injectors;
- a motor of the vehicle;
- a pipe connecting the cylinder to the motor,
wherein said gas fuel filtering device is placed between the pressure regulator and the injectors of the motor,
and wherein said gas fuel filtering device comprises a gas inlet duct, a gas outlet duct, a first passive-technology filtering element, for example a cartridge in microfibre or paper, and an active-technology second filtering element, for example an activated carbon filter, fluidically connected in series to said passive-technology filtering element along a gas path between said inlet duct and said outlet duct, said first and second filtering elements having an axial-symmetric shape, being coaxial with one another and the second filtering element being placed on top of the first filtering element so as to have the filtering device vertically oriented, said first filtering element being suitable for filtering the gas fuel from solid particles, oils and water, said second filtering element being suitable for filtering the gas fuel from heavy hydrocarbons, said inlet and outlet ducts being coplanar to one another and extending at right angles with respect to the said symmetry axes of the filters, and wherein the inlet duct is fluidically connected to the pressure regulator, and the outlet duct is fluidically connected to the fuel injectors.

2. Self-propulsion gas system according to the previous claim, wherein said first and second filtering elements are housed inside a device body having a gas inlet duct and a filtered gas outlet duct.

3. Self-propulsion gas system according to the previous claim, wherein said device body comprises a first chamber in fluid communication with said inlet duct, a second chamber in fluid communication with said first chamber only through the first filtering element, and a third chamber in fluid communication with said outlet duct and in fluid communication with said second chamber only through the second filtering element.

4. Self-propulsion gas system according to any of the previous claims, wherein the gas inlet and outlet ducts lay on a plane above the first and the second filtering elements.

5. Self-propulsion gas system according to the previous claim, wherein the first chamber has an annular shape and extends at least around the first filtering element.

6. Self-propulsion gas system according to any of the claims 3-5, wherein the second filtering element is housed in a respective seat, said seat having an end connecting portion connected with an outlet extremity of the first filtering element, the second chamber being formed in said end connecting portion.

7. Self-propulsion gas system according to any of the claims 3-6, wherein said third chamber is formed in a top portion of the seat of the second filtering element, said top portion being open to allow fitting/removing the second filtering element from the respective seat, the device body being provided with a closing cap of said top portion.

8. Self-propulsion gas system according to claim 3, wherein the device body comprises a lower portion wherein the first filtering element is at least partially housed, and an upper portion removably and gas-tightly connected to said lower portion, in said upper portion being formed the seat for the second filtering element and the inlet and outlet ducts, the lower portion and the upper portion jointly delimiting the first chamber.

9. Self-propulsion gas system according to any of the previous claims, wherein said passive-technology filtering element is a cartridge in microfibre or in paper.

10. Self-propulsion gas system according to any of the previous claims, wherein said active-technology filtering element consists of HCA (activated carbon honeycomb).

11. Self-propulsion gas system according to any of the previous claims, further comprising a temperature sensor and/or a pressure sensor.

## Patentansprüche

1. Selbst-Antrieb-Gassystem, umfassend:
- einen Zylinder, welcher ein Hochdruck-Gas enthält und in dem hinteren Teil eines Fahrzeugs platziert ist;
- ein Zylinderventil, welches an der Ausgabe des Zylinders platziert ist;
- einen Druckregulator;
- eine Gas-Brennstoff-Filtervorrichtung;
- eine Mehrzahl von Brennstoff-Injektoren;
- einen Motor des Fahrzeugs;
- eine Leitung, welche den Zylinder mit dem Motor verbindet,
wobei die Gas-Brennstoff-Filtervorrichtung zwischen dem Druckregulator und den Injektoren des Motors platziert ist,
und wobei die Gas-Brennstoff-Filtervorrichtung eine Gas-Einlassleitung, eine Gas-Auslassleitung, ein erstes Filterelement von passiver Technologie, zum Beispiel einen Einsatz aus Mikrofaser oder Papier, und ein zweites Filterelement von aktiver Technologie umfasst, zum Beispiel einen Aktivkohlefilter, welches fluidisch in Reihe mit dem Filterelement von passiver Technologie entlang eines Gaswegs zwischen der Einlassleitung und der Auslassleitung verbunden ist, wobei die ersten und zweiten Filterelemente eine axialsymmetrische Form aufweisen, koaxial zueinander sind und das zweite Filterelement auf dem ersten Filterelement platziert ist, um die Filtervorrichtung vertikal orientiert aufzuweisen, wobei das erste Filterelement dazu geeignet ist, den Gas-Brennstoff von Feststoffpartikeln, Ölen und Wasser zu filtern, wobei das zweite Filterelement dazu geeignet ist, den Gas-Brennstoff von schweren Kohlenwasserstoffen zu filtern, wobei die Einlass- und Auslassleitungen coplanar zueinander sind und sich unter rechten Winkeln in Bezug auf die Symmetrieachsen der Filter erstrecken,
und wobei die Einlassleitung mit dem Druckregulator fluidisch verbunden ist und die Auslassleitung mit den Brennstoff-Injektoren fluidisch verbunden ist.

2. Selbst-Antrieb-Gassystem nach dem vorhergehenden Anspruch, wobei die ersten und zweiten Filterelemente in einem Vorrichtungskörper aufgenommen sind, welcher eine Gas-Einlassleitung und eine Auslassleitung für gefiltertes Gas aufweist.

3. Selbst-Antrieb-Gassystem nach dem vorhergehenden Anspruch, wobei der Vorrichtungskörper eine erste Kammer in Fluidverbindung mit der Einlassleitung, eine zweite Kammer in Fluidverbindung mit der ersten Kammer nur durch das erste Filterelement und eine dritte Kammer in Fluidverbindung mit der Auslassleitung und in Fluidverbindung mit der zweiten Kammer nur durch das zweite Filterelement umfasst.

4. Selbst-Antrieb-Gassystem nach einem der vorhergehenden Ansprüche, wobei die Gas-Einlass- und Auslassleitungen an einer Ebene über den ersten und den zweiten Filterelementen liegen.

5. Selbst-Antrieb-Gassystem nach dem vorhergehenden Anspruch, wobei die erste Kammer eine ringförmige Form aufweist und sich wenigstens um das erste Filterelement erstreckt.

6. Selbst-Antrieb-Gassystem nach einem der Ansprüche 3 bis 5, wobei das zweite Filterelement in einem entsprechenden Sitz aufgenommen ist, wobei der Sitz ein Ende aufweist, welches einen End-VerbindungsAbschnitt, welcher mit einer Auslass-Extremität des ersten Filterelements verbunden ist, wobei die zweite Kammer in dem End-Verbindungs-Abschnitt gebildet ist.

7. Selbst-Antrieb-Gassystem nach einem der Ansprüche 3 bis 6, wobei die dritte Kammer in einem oberen Abschnitt des Sitzes des zweiten Filterelements gebildet ist, wobei der obere Abschnitt offen ist, um zu erlauben, dass das zweite Filterelement in den entsprechenden Sitz eingepasst wird / aus dem entsprechenden Sitz entfernt wird, wobei der Vorrichtungskörper mit einer Verschlusskappe des oberen Abschnitts bereitgestellt ist.

8. Selbst-Antrieb-Gassystem nach Anspruch 3, wobei der Vorrichtungskörper einen unteren Abschnitt, wobei das erste Filterelement wenigstens teilweise aufgenommen ist, und einen oberen Abschnitt umfasst, welcher mit dem unteren Abschnitt lösbar und gasdicht verbunden ist, wobei in dem oberen Abschnitt der Sitz für das zweite Filterelement und die Einlass- und Auslassleitungen gebildet sind, wobei der untere Abschnitt und der obere Abschnitt gemeinsam die erste Kammer begrenzen.

9. Selbst-Antrieb-Gassystem nach einem der vorhergehenden Ansprüche, wobei das Filterelement von passiver Technologie ein Einsatz aus Mikrofaser oder aus Papier ist.

10. Selbst-Antrieb-Gassystem nach einem der vorhergehenden Ansprüche, wobei das Filterelement von aktiver Technologie aus HCA (aktive Kohlenstoff-Bienenwabe) besteht.

11. Selbst-Antrieb-Gassystem nach einem der vorhergehenden Ansprüche, ferner umfassend einen Temperatursensor und/oder einen Drucksensor.

## Revendications

1. Système à gaz à autopropulsion comprenant :
- un cylindre contenant un gaz sous haute pression et placé dans la partie arrière d'un véhicule,
- une soupape de cylindre placée sur la sortie du cylindre ;
- un régulateur de pression ;
- un dispositif de filtration de combustible gazeux ;
- une pluralité d'injecteurs de combustible ;
- un moteur de véhicule ;
- un tuyau raccordant le cylindre au moteur,
dans lequel ledit dispositif de filtration de combustible gazeux est placé entre le régulateur de pression et les injecteurs du moteur, et dans lequel ledit dispositif de filtration de combustible gazeux comprend un conduit d'admission de gaz, un conduit de sortie de gaz, un premier élément filtrant à technologie passive, par exemple une cartouche en microfibres ou en papier, et un second élément filtrant à technologie active, par exemple un filtre à charbon actif, en communication fluidique en série avec ledit élément filtrant à technologie passive le long d'un trajet de gaz entre ledit conduit d'admission et ledit conduit de sortie, lesdits premier et second éléments filtrants ayant une forme à symétrie axiale qui sont coaxiaux l'un avec l'autre et le second élément filtrant étant placé au-dessus du premier élément filtrant de manière à ce que le dispositif de filtration soit orienté verticalement, ledit premier élément filtrant étant approprié pour filtrer du combustible gazeux les particules solides, les huiles et l'eau, ledit second élément filtrant étant approprié pour filtrer du combustible gazeux les hydrocarbures lourds, lesdits conduits d'admission et de sortie étant coplanaires l'un avec l'autre et s'étendant à angles droits par rapport auxdits axes de symétrie des filtres, et dans lequel le conduit d'admission est en communication fluidique avec le régulateur de pression et le conduit de sortie est en communication fluidique avec les injecteurs de combustible.

2. Système à gaz à autopropulsion selon la revendication précédente, dans lequel lesdits premier et second éléments filtrants sont logés dans un corps de dispositif ayant un conduit d'admission de gaz et un conduit de sortie de gaz filtré.

3. Système à gaz à autopropulsion selon la revendication précédente, dans lequel ledit corps de dispositif comprend une première chambre en communication fluidique avec ledit conduit d'admission, une deuxième chambre en communication fluidique avec ladite première chambre uniquement via le premier élément filtrant, et une troisième chambre en communication fluidique avec ledit conduit de sortie et en communication fluidique avec ladite deuxième chambre uniquement via le second élément filtrant.

4. Système à gaz à autopropulsion selon l'une quelconque des revendications précédentes, dans lequel les conduits d'admission et de sortie de gaz se trouvent sur un plan situé au-dessus des premier et second éléments filtrants.

5. Système à gaz à autopropulsion selon la revendication précédente, dans lequel la première chambre a une forme annulaire et s'étend au moins autour du premier élément filtrant.

6. Système à gaz à autopropulsion selon l'une quelconque des revendications 3-5, dans lequel le second élément filtrant est logé dans un siège respectif, ledit siège ayant une partie de raccordement terminale raccordée à une extrémité de sortie du premier élément filtrant, la deuxième chambre étant formée dans ladite partie de raccordement terminale.

7. Système à gaz à autopropulsion selon l'une quelconque des revendications 3-6, dans lequel ladite troisième chambre est formée dans une partie supérieure du siège du second élément filtrant, ladite partie supérieure étant ouverte pour permettre un ajustement/un retrait du second élément filtrant du siège respectif, le corps de dispositif étant pourvu d'un bouchon de fermeture de ladite partie supérieure.

8. Système à gaz à autopropulsion selon la revendication 3, dans lequel le corps de dispositif comprend une partie inférieure dans laquelle le premier élément filtrant est au moins en partie logé, et une partie supérieure raccordée de manière amovible et étanche au gaz à ladite partie inférieure, en formant dans ladite partie supérieure le siège du second élément filtrant et les conduits d'admission et de sortie, la partie inférieure et la partie supérieure délimitant conjointement la première chambre.

9. Système à gaz à autopropulsion selon l'une quelconque des revendications précédentes, dans lequel ledit élément filtrant à technologie passive est une cartouche en microfibres ou en papier.

10. Système à gaz à autopropulsion selon l'une quelconque des revendications précédentes, dans lequel ledit élément filtrant à technologie active est constitué de HCA (structure en nid d'abeilles à charbon actif).

11. Système à gaz à autopropulsion selon l'une quelconque des revendications précédentes, comprenant en outre un capteur de température et/ou un capteur de pression.
